# EUROPEAN PATENT SPECIFICATION

(11) **EP 0 373 711 B1**
(45) Date of publication and mention of the grant of the patent: **13.10.1993**
(21) Application number: 89203135.2
(22) Date of filing: 11.12.1989
(51) Int. Cl.: A01B 29/06

(54) **A soil cultivating machine**
Bodenbearbeitungsmaschine
Dispositif de travail du sol

(30) Priority: 13.12.1988 NL 8803046
(43) Date of publication of application: 20.06.1990
(73) Proprietor: C. van der Lely N.V., NL-3155 PD Maasland (NL)
(72) Inventor: Van der Lely, Cornelis, CH-Zug (CH)
(74) Representative: Mulder, Herman

(56) References cited:
- EP-A- 0 081 271
- EP-A- 0 134 740
- EP-A- 0 150 080
- EP-A- 0 292 589
- DE-B- 1 178 630
- FR-A- 533 738
- FR-A- 2 313 857
- FR-A- 2 558 679
- US-A- 4 047 576

## Description

The invention relates to a soil cultivating machine comprising a frame and at least one roller provided with a plurality of adjacently arranged circular members.

A suchlike machine is known from the european patent application 01580080. The circular members of the roller described herein are produced of sheet metal and are saw blade alike. In a soil cultivating machine of this type, the just cultivated soil is compressed by means of the roller, whereby the soil is prevented from drying up too much and at the same time it is achieved that seeds introduced into the soil can germinate undisturbedly. However, when heavy soils are cultivated, earth may get stuck between the circular members, as a result of which the action of the roller is adversely affected and ultimately the roller is prevented from performing its function at all.

The aim of the invention is to provide for a roller in which the earth moved during operation between the disc-like members is relatively easily discharged outwardly towards the roller periphery and wherein the roller is of an improved construction.

According to the invention the circular members of the roller are disc-like, of which member the sides, which extend at least substantially perpendicularly to the axis of rotation of the roller, have a profile that from a central carrier spirals towards the periphery of a circular member. With this construction the advantage is obtained that the spirals can assist effectively in discharging earth moved between said members.

A further feature of the invention relates to a soil cultivating machine of the above-defined type, wherein the circular members include at their periphery an edge having alternately narrower and wider supporting faces. Thus, it is better possible to prevent earth from penetrating easily to between the said circular members.

A still further feature of the invention relates to a soil cultivating machine of the above-defined type, wherein the circular members are in the shape of hollow discs and the walls thereof are provided with a profile of bulging portions. Thus, using the construction of the invention, it is possible to give the roller a less heavy construction, while nevertheless a sufficient stiffness is maintained in order to be able to support the machine even at a larger working width.

A still further feature of the invention relates to a soil cultivating machine of the above-defined type, wherein the circular members are provided with spoke-like projections and the spoke-like projections of two adjacent circular members face each other. Hereby it is achieved that the spoke-like projections of two adjacent circular members can co-operate effectively in discharging any earth moved to between the said members.

A still further feature of the invention relates to a soil cultivating machine of the above-defined type, wherein the roller is provided with a plurality of scrapers to co-operate with spiral projections on the circular members. Thus, the effect of the spiral projections on the circular members can be supported effectively.

A final feature of the invention relates to a soil cultivating machine of the above-defined type, wherein scrapers are located between the circular members at their rear sides and are fitted to a carrier by means of arms which extend from a central carrier of the roller. Using this provision, the scraper can co-operate to the best possible extent with the facing sides of the circular members, without it being possible for the manner in which the scraper is fitted to have any detrimental effect on its performance.

For a better understanding of the invention and to show how the same may be carried into effect, reference will now be made, by way of example, to two embodiments shown in the accompanying drawings, in which:
Figure 1 is a plan view of a soil-cultivating machine according to the invention;
Figure 2 is, to an enlarged scale, a view taken on the line II - II in Figure 1;
Figure 3 is partly a cross-sectional view taken in the direction of the arrow III in Figure 2;
Figure 4 is a view in accordance with Figure 2 of a second embodiment of a roller according to the invention, and
Figure 5 is partly a cross-sectional view taken in the direction of the arrow V in Figure 4.

The implement shown in the drawings is a soil cultivating machine, in particular one for the preparation of a seed bed.

The machine comprises a frame portion 1 which extends transversely to the direction of operative travel A. In the frame portion 1, which is of a box-like structure, there are supported at equal interspaces of preferably 25 cms the upwardly directed, preferably vertical, shafts 2 of soil working members. At its end projecting from the bottom side of the frame portion 1, each shaft 2 is provided with an at least substantially horizontal carrier 3. At its ends, each carrier 3 is fitted with downwardly extending soil working elements 4 constituted by tines.

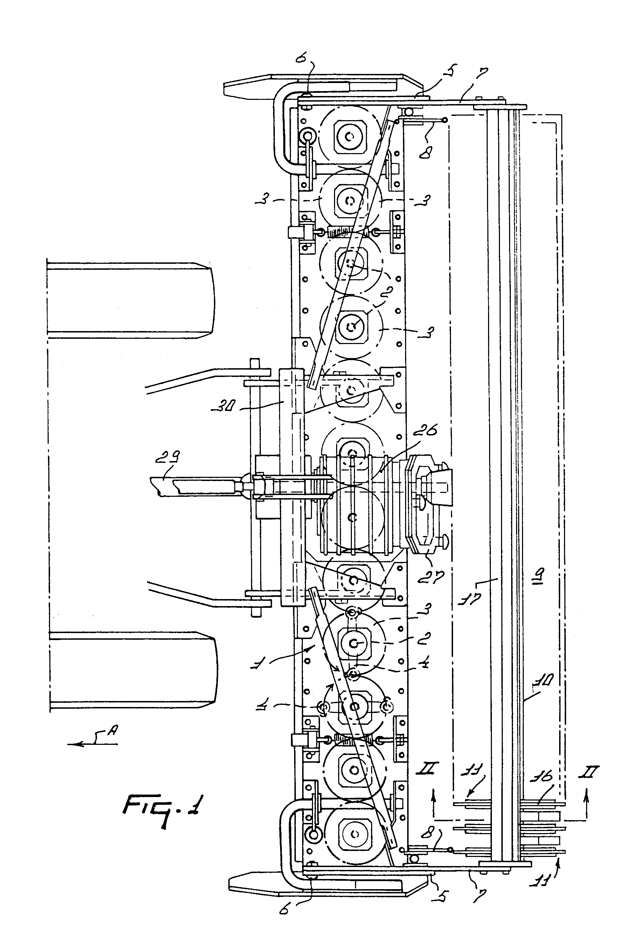

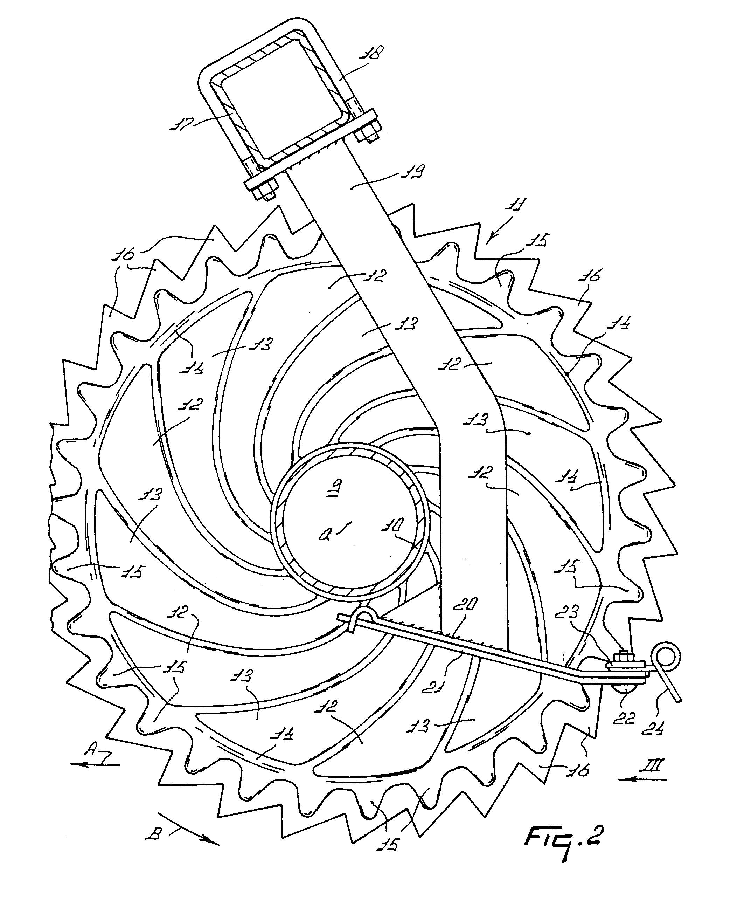

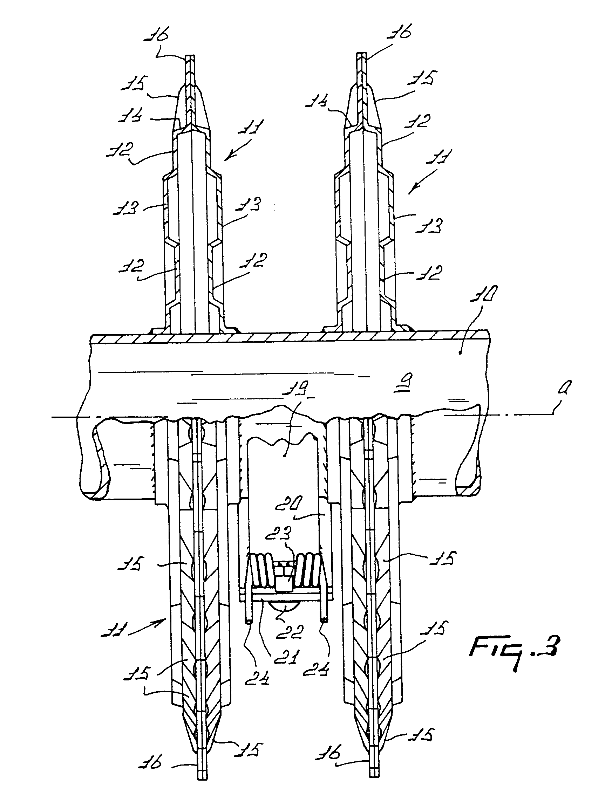

The ends of the box-like frame portion 1 are closed by means of plates 5 which extend upwardly and at least substantially parallel to a vertical plane in the direction of operative travel A of the machine. Near its leading side, each of the plates 5 is provided with a pin 6 which extends transversely to the direction of operative travel A, the arrangement being such that the longitudinal centre lines of the respective pins 6 are in alignment. About each of the pins 6 there is arranged freely pivotably an arm 7 which extends rearwardly along the inner side of a plate 5. Near the trailing edge of the frame portion 1 there is arranged an adjusting device 8, by means of which each arm 7 can be adjusted to and locked in a plurality of positions, the adjusting device 8 in this embodiment being constituted by a threaded spindle. Between the ends of the arms 7 there is supported freely rotatably a roller 9 which is designed as a packer roller. The roller 9 comprises a central cylindrical carrier 10 having a diameter of approximately 11 cms, the ends of which carrier are supported freely rotatably in the arms 7 by means of shafts and bearings accommodated in bearing housings. Near its ends and therebetween at equal interspaces of approximately 8 cms there are arranged on the cylindrical carrier 10 circular members 11 which, preferably, have a diameter of approximately 50 cms. The circular members 11, which are disc-shaped, extend at least substantially parallel to a plane perpendicular to the longitudinal centre line a of the cylindrical carrier 10, the said longitudinal centre line a constituting the axis of rotation of the roller 9. Each circular member 11 is assembled like a box (Figure 3) from two plate sections which are welded together by means of spot welding. The spacing between the planes of symmetry of the box-like circular members 11 is approximately 12 cms. The plate section sides, which extend at least substantially perpendicularly to the axis of rotation a, have a profile consisting of alternating indentations 12 and bulges 13 (Figure 2) of increasing widths, taken from the cylindrical carrier 10 towards the periphery. From the cylindrical carrier 10 towards the periphery of the circular member 11, the indentations 12 and the bulges 13 extend in the form of a spiral, thereby constituting spoke-like projections. Each indentation 12 and bulge 13, respectively, extends through a peripheral angle of approximately 90°, the arrangement being such that at the bottom side the peripheral sides of the spoke-like portions point downwardly and rearwardly relative to the sense of rotation B of the roller 9 during operation. At the side of the cylindrical carrier 10 a spoke-like projection extends at least substantially tangentially relative to the longitudinal centre line a, as it also does near the periphery of the circular member 11. At the periphery of the circular member 11, the respective indentations 12 and bulges 13 constitute an edge 14 which, seen in a direction perpendicularly to the axis of rotation a of the roller, includes alternately narrow and wider supporting faces. The narrow supporting faces are part of the indentations 12, while the wider supporting faces are part of the bulging portions 13 of the profile. At its outer side, the edge 14 merges via bulges 15 into the teeth 16 of a crown of teeth. The teeth are in the form of a sawtooth, the longer side of a tooth 16 being at the leading side, seen in the direction of rotation B imparted to the roller 9 during operation, and extending at least substantially tangentially. The shorter side of a tooth 16, which is contiguous to the longer side of the subsequent one, extends at least substantially radially (Figure 2).

Between the circular members 11 there are fitted scrapers below the axis of rotation a of the roller 9 in the lowermost rear quadrant (Figure 2). To that end there is arranged between the arms 7 and at least substantially above the cylindrical carrier 10 a carrier 17, to which an arm 19 is fitted by means of brackets 18 whose threaded ends co-operate with nuts. From its point of connection, the arm 19 extends obliquely downwardly and rearwardly and, seen in plan view, merges behind the cylindrical carrier 10 via a bend into an at least substantially straightly downwardly extending portion. The bottom end of the arm 19 is bevelled at some distance below the cylindrical carrier 10, the arrangement being such that its rear side is located in a lower position than its leading side. The bevelled bottom end is provided with a straightly extending support 20, the arrangement being such that the leading side of the support 20 is located in a higher position than the rear side thereof. The leading side of the support 20 includes a downwardly curved portion which is passed through a recess in a scraper 21 bearing against the bottom side of the support (Figure 2). The scraper 21 extends to as far as the rear side of the support 20, which rear side is in an at least substantially horizontal position. The leading side of the scraper 21 is located substantially below the axis of rotation a of the roller 9, while the rear side extends to as far as the path described by the teeth 16 (Figure 2). The scraper 21 is located approximately in the centre of the lowermost rear quadrant of the roller. The connecting member of a pair of integrally designed tines 24 is mounted on the rear side of the support 20 by means of bolts 22 and a clamping piece 23. The connecting member merges via a coiled part into a downwardly and obliquely rearwardly extending active portion of the tine, which portion acts as a subsoiler member. The scraper 21, whose leading side is in a higher position than its rear side, encloses an angle of approximately 15° with the horizontal, the arrangement being such that the scraper extends at least substantially perpendicularly to the projections constituted by the profile.

Inside the box-like frame portion 1, each of the shafts 2 of a soil working member is fitted with a pinion 25, the arrangement being such that the pinions 25 on the shafts 2 of adjacent soil working members are in driving connection with each other. Near the centre of the box-like frame portion 1, the shaft 2 of a soil working member is extended upwardly and reaches by means of this extension into a gear box 26, inside which the extension is in driving connection with a shaft which extends in the direction of operative travel A and, via a speed variator 27 located at the rear side of the gear box 26, is in driving connection with a superjacent shaft 28 which, seen in plan view, is located above the centre of the box-like frame portion 1, extends into the direction of operative travel A and projects from the gear box both at the front side and at the rear side. With the aid of an intermediate shaft 29 the shaft 28 can be coupled to the power take-off shaft of a tractor. The front side of the frame portion 1 is fitted with a trestle 30 including a three-point connection for coupling the machine to the three-point lifting hitch of a tractor.

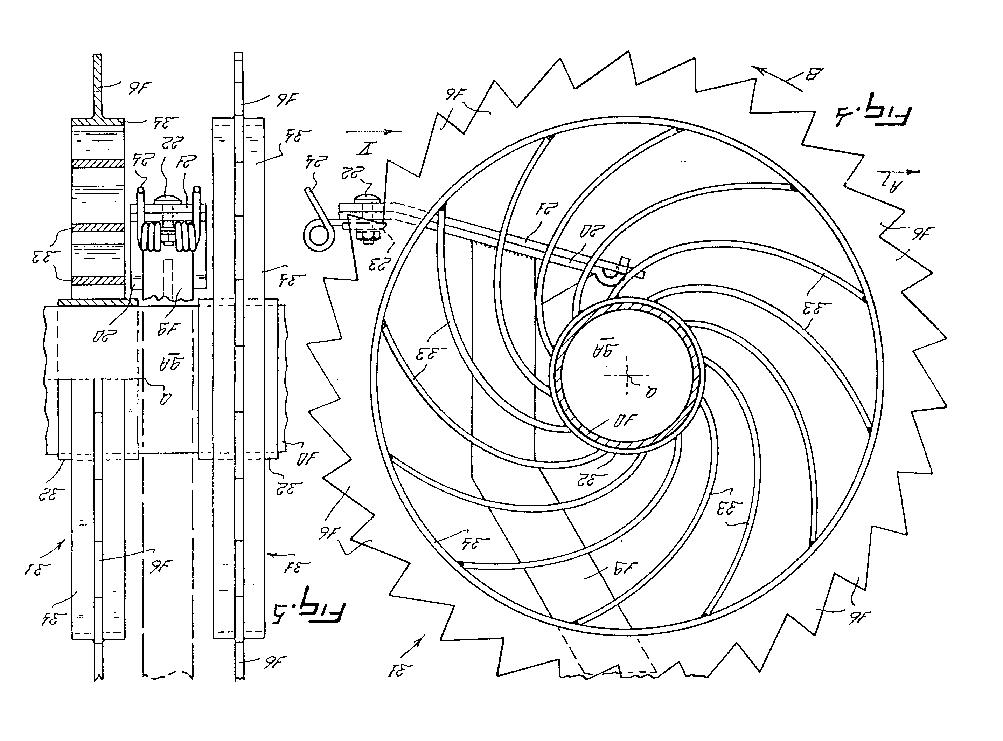

Figures 4 and 5 illustrate a second embodiment of a packer roller 9A in accordance with the invention. In this embodiment, disc-shaped circular members 31 are arranged on the cylindrical carrier 10 in a side-by-side relationship in a manner corresponding to that described with reference to the previous embodiment. Each circular member 31 includes a bushing 32 fitted on the carrier 10. The bushing 32 is provided with spiral, spoke-like outwardly extending projections 33 in the form of strips, the arrangement being such that the spacing between two consecutive spoke-like projections 33 increases, taken from the bushing 32 towards the periphery of a circular member 31. The wider sides of the spoke-like projections 33 extend parallel to the axis of rotation a. Also in this embodiment, the projections 33 extend through a peripheral angle of approximately 90° and the diameter of a circular member 31 is approximately 50 cms. Near the periphery of a circular member 31, the spoke-like projections 33 are fitted to an edge 34, the wider portion of which corresponds to the width of a projection 33 and extends at least substantially parallel to the axis of rotation a of the roller 9A. Preferably, the width of the edge 34 is approximately 4 cms. In its midway point, the edge 34 is provided at its outer side with a crown of teeth which corresponds to that located at the periphery of the circular members 11 in the previous embodiment. Adjacent circular members 31 are arranged in such a manner that the spoke-like projections 33 are opposite each other.

The machine as described in the foregoing operates as follows:
During operation, the machine is coupled to the three-point lifting hitch of a tractor by means of the trestle 30 and each of the soil working members can be driven from the power take-off shaft of the tractor via the intermediate shaft 29 and the above-described transmission in such a way that two adjacent soil working members rotate in opposite directions, whereby their downwardly directed soil working elements 4 cultivate at least contiguous strips of soil. During operation, the machine bears on the soil via the said packer roller 9 and 9A, respectively. During travel of the machine, the packer roller is driven in a direction indicated by means of the arrow B in the drawings via the crown of teeth 16 of the circular members 11 and 31, respectively. Since, like in the first embodiment, the edge 14 of each circular member 11 has supporting faces of alternating widths, it is possible to prevent earth from penetrating easily between two adjacent circular members. If this would happen nevertheless, this earth can be moved gradually to the exterior again with the aid of the spiral, spoke-like projections constituted by the indentations 12 and bulges 13 of the profile, which discharge towards the exterior is facilitated by the fact that at their bottom sides the spoke-like projections extend obliquely downwardly and rearwardly relative to the direction of rotation B. The discharge of any earth penetrated to between two circular members 11 and 31, respectively, can be promoted significantly by using the scrapers 21 which, as has been stated in the foregoing already, extend from the rear side obliquely upwardly and forwardly at an angle of approximately 15° to the horizontal, the arrangement being such that the plane of the scraper is at least substantially always perpendicular to the shape of the spoke-like projections. With the aid of the tines 24 located at the rear side of the scrapers 21, a subsoiling action can be obtained. The mode of operation of the packer roller 31 in accordance with the second embodiment is in all further respect substantially identical to that of the packer roller in accordance with the first embodiment. Both embodiments render it possible, for the purpose of supporting the machine, to use a light weight roller which nevertheless has a sufficient stiffness to support also machines having a large working width. Due to the large diameter of the respective circular members 11 and 31 of approximately 50 cms, the roller has a low roll resistance. The scrapers 21 can be replaced easily.

## Claims

1. A soil cultivating machine comprising a frame and at least one roller (9) provided with a plurality of adjacently arranged circular members (11, 31), characterized in that the circular members (11,31) are disc-like, of which members the sides, which extend at least substantially perpendicularly to the axis of rotation (a) of the roller (9), have a profile that from a central carrier (10) spirals towards the periphery of a circular member.

2. A soil cultivating machine as claimed in claim 1, characterized in that the circular members (11) include at their periphery an edge (14) having alternately narrower and wider supporting faces.

3. A soil cultivating machine as claimed in any one of the preceding claims, characterized in that the circular members (11) are in the shape of the side walls thereof hollow disks being provided with a profile comprising indentations (12) and bulges (13), respectively.

4. A soil cultivating machine as claimed in any one of the preceding claims, characterized in that the profile is provided with indentations (12) and bulges (13), respectively, of increasing widths, taken towards the periphery of each circular member (11).

5. A soil cultivating machine as claimed in any one of claims 3 to 4, characterized in that each circular member (11) is constituted by two spaced apart, profiled portions which are interconnected at their peripheries.

6. A soil cultivating machine as claimed in claim 5, characterized in that the profile merges into an edge (14) located at the periphery, the arrangement being such that the edge (14) is constituted by alternately narrower and wider supporting faces which form part of the indentations (12) and bulges (13), respectively, of the profile.

7. A soil cultivating machine as claimed in any one of the preceding claims, characterized in that the circular members (31) are provided with spoke-like projections (33) and the spoke-like projections of two adjacent circular members face each other.

8. A soil cultivating machine as claimed in claim 4, characterized in that a circular member (31) comprises a plurality of projections (33) which extend in a spiral form from the central carrier (10) of the roller (9A).

9. A soil cultivating machine as claimed in claim 8, characterized in that the distance between the outwardly spiralling projections (33) increases towards the periphery.

10. A soil cultivating machine as claimed in claim 8 or 9, characterized in that at the periphery the projections (33) are fitted on a rim-like edge (34), the broad side of which extends at least substantially parallel to the axis of rotation of the roller.

11. A soil cultivating machine as claimed in any one of the preceding claims, characterized in that the periphery of each circular member (11, 31) is provided with a crown of teeth (16).

12. A soil cultivating machine as claimed in claim 11, characterized in that the crown of teeth (16) includes bulging portions (15).

13. A soil cultivating machine as claimed in claim 11 or 12, characterized in that the teeth (16) of the crowns of teeth are in the form of sawteeth of which, taken in the direction of rotation of the roller (9, 9A), the leading edges extend at least substantially tangentially, while the trailing edges are directed substantially radially.

14. A soil cultivating machine as claimed in any one of claims 11 to 13, characterized in that the crown of teeth is provided in the centre of the edge, the arrangement being such that the assembly is T-shaped.

15. A soil cultivating machine as claimed in any one of the preceding claims, characterized in that between two adjacent circular members (11, 31) there is arranged a scraper (21) to co-operate with the profile or projections (12, 13, 33) on the circular members (11, 31).

16. A soil cultivating machine as claimed in any one of the preceding claims, characterized in that scrapers (21) are located between the circular members (11, 31) at their rear sides and are fitted to a carrier (17) by means of arms (19) which extend from a central carrier (10) of the roller (9, 9A).

17. A soil cultivating machine as claimed in any one of the preceding claims, characterized in that each scraper is located with its leading edge in a higher position relative to the ground than its trailing edge, the plane of each scraper being at least substantially perpendicular to the side faces of the projections (12, 13, 33) of a circular member (11, 31).

18. A soil cultivating machine as claimed in any one of claims 15 to 17, characterized in that each scraper (21) extends from the periphery of the circular members (11, 31) to below the central carrier (10) of those circular members.

19. A soil cultivating machine as claimed in any one of the claims 15 to 18, characterized in that each scraper (21) is fastened to a support (20) which is connected to the bottom end of an upwardly extending arm (19).

20. A soil cultivating machine as claimed in claim 19, characterized in that the support (20) includes a downwardly directed lug which is accommodated in an aperture of the scraper (21) , and that each scraper is bolted at its trailing edge to the support (20) by means of a bolt (22).

21. A soil cultivating machine as claimed in any one of the preceding claims, characterized in that the trailing part, of each support (20) and scraper (21) extends at least substantially horizontally and is provided with a subsoiler member (24).

22. A soil cultivating machine as claimed in claim 21, characterized in that the subsoiler member (24) is constituted by two adjacently located tines of an elastic material.

## Patentansprüche

1. Bodenbearbeitungsmaschine mit einem Gestell und mindestens einer Walze (9) mit mehreren nebeneinander angeordneten, kreisringförmigen Gliedern (11, 31),
dadurch gekennzeichnet, daß die kreisringförmigen Glieder (11, 31) scheibenförmig ausgebildet sind und an ihren Seitenflächen, die sich zumindest im wesentlichen senkrecht zu der Drehachse (a) der Walze (9) erstrecken, eine Profilierung aufweisen, die von einem zentralen Träger (10) spiralförmig in Richtung auf die Peripherie eines kreisringförmigen Gliedes verläuft.

2. Bodenbearbeitungsmaschine nach Anspruch 1,
dadurch gekennzeichnet, daß die kreisringförmigen Glieder (11) an ihrer Peripherie einen Rand (14) aufweisen, an dem abwechselnd schmalere und breitere Tragflächen ausgebildet sind.

3. Bodenbearbeitungsmaschine nach einem der vorhergehenden Ansprüche,
dadurch gekennzeichnet, daß die kreisringförmigen Glieder (11) die Gestalt von Hohlscheiben haben, deren Seitenwände ein aus Vertiefungen (12) und Ausbuchtungen (13) bestehendes Profil aufweisen.

4. Bodenbearbeitungsmaschine nach einem der vorhergehenden Ansprüche,
dadurch gekennzeichnet, daß das Profil Vertiefungen (12) bzw. Ausbuchtungen (13) aufweist, deren Breite in Richtung auf die Peripherie des kreisringförmigen Gliedes (11) zunimmt.

5. Bodenbearbeitungsmaschine nach einem der Ansprüche 3 bis 4,
dadurch gekennzeichnet, daß das kreisringförmige Glied (11) durch zwei auf Abstand liegende, profilierte Teile gebildet ist, die an ihrer Peripherie miteinander verbunden sind.

6. Bodenbearbeitungsmaschine nach Anspruch 5,
dadurch gekennzeichnet, daß das Profil in einen an der Peripherie angeordneten Rand (14) übergeht, der durch abwechselnd schmalere und breitere Tragflächen gebildet ist, die Bestandteil der Vertiefungen (12) bzw. der Ausbuchtungen (13) des Profils sind.

7. Bodenbearbeitungsmaschine nach einem der vorhergehenden Ansprüche,
dadurch gekennzeichnet, daß die kreisringförmigen Glieder (31) mit speichenartigen Vorsprüngen (33) versehen sind, und daß die speichenartigen Vorsprünge von zwei benachbarten, kreisringförmigen Gliedern einander zugewandt sind.

8. Bodenbearbeitungsmaschine nach Anspruch 4,
dadurch gekennzeichnet, daß ein kreisringförmiges Glied (31) mehrere Vorsprünge (33) aufweist, die spiralförmig von dem zentralen Träger (10) der Walze (9A) ausgehen.

9. Bodenbearbeitungsmaschine nach Anspruch 8,
dadurch gekennzeichnet, daß der Abstand zwischen den spiralförmig nach außen verlaufenden Vorsprüngen (33) zur Peripherie hin zunimmt.

10. Bodenbearbeitungsmaschine nach Anspruch 8 oder 9, dadurch gekennzeichnet, daß die Vorsprünge (33) an der Peripherie auf einem felgenartigen Rand (34) angeordnet sind, dessen breite Seite sich zumindest im wesentlichen parallel
zu der Drehachse der Walze erstreckt.

11. Bodenbearbeitungsmaschine nach einem der vorhergehenden Ansprüche,
dadurch gekennzeichnet, daß die Peripherie jedes kreisringförmigen Gliedes (11, 31) mit einem Kranz von Zähnen (16) versehen ist.

12. Bodenbearbeitungsmaschine nach Anspruch 11, dadurch gekennzeichnet, daß der Kranz von Zähnen (16) ausgebuchtete Abschnitte (15) aufweist.

13. Bodenbearbeitungsmaschine nach Anspruch 11 oder 12,
dadurch gekennzeichnet, daß die Zähne (16) des Zahnkranzes als Sägezähne ausgebildet sind, deren in Drehrichtung der Walze (9, 9A) vordere Kanten sich zumindest im wesentlichen tangential erstrecken, während die hinteren Kanten im wesentlichen radial ausgerichtet sind.

14. Bodenbearbeitungsmaschine nach einem der Ansprüche 11 bis 13,
dadurch gekennzeichnet, daß der Zahnkranz in der Mitte des Randes angeordnet ist, derart, daß beide zusammen T-förmig sind.

15. Bodenbearbeitungsmaschine nach einem der vorhergehenden Ansprüche,
dadurch gekennzeichnet, daß zwischen zwei benachbarten, kreisringförmigen Gliedern (11, 31) ein Abstreifer (21) angeordnet ist, der mit dem Profil bzw. den Vorsprüngen (12, 13, 33) der kreisringförmigen Glieder (11, 31) zusammenwirkt.

16. Bodenbearbeitungsmaschine nach einem der vorhergehenden Ansprüche,
dadurch gekennzeichnet, daß zwischen den kreisringförmigen Gliedern (11, 31) an deren Rückseite Abstreifer (21) angeordnet und an einem Träger (17) mittels Armen (19) befestigt sind, die von einem zentralen Träger (10) der Walze (9, 9A) ausgehen.

17. Bodenbearbeitungsmaschine nach einem der vorhergehenden Ansprüche,
dadurch gekennzeichnet, daß jeder Abstreifer derart angeordnet ist, daß seine Vorderkante einen größeren Abstand zum Boden hat als seine Hinterkante, wobei sich die Ebene des Abstreifers zumindest im wesentlichen senkrecht zu den Seitenflächen der Vorsprünge (12, 13, 33) eines kreisringförmigen Gliedes (11, 31) erstreckt.

18. Bodenbearbeitungsmaschine nach einem der Ansprüche 15 bis 17,
dadurch gekennzeichnet, daß sich jeder Abstreifer (21) von der Peripherie der kreisringförmigen Glieder (11, 31) bis unter den zentralen Träger (10) der kreisringförmigen Glieder erstreckt.

19. Bodenbearbeitungsmaschine nach einem der Ansprüche 15 bis 18,
dadurch gekennzeichnet, daß jeder Abstreifer (21) an einer Stütze (20) befestigt ist, die mit dem unteren Ende eines sich nach oben erstreckenden Armes (19) verbunden ist.

20. Bodenbearbeitungsmaschine nach Anspruch 19,
dadurch gekennzeichnet, daß die Stütze (20) einen nach unten gerichteten Ansatz aufweist, der in eine Öffnung des Abstreifers (21) eingreift, und daß der Abstreifer an seinem hinteren Ende mittels eines Bolzens (22) an der Stütze (20) befestigt ist.

21. Bodenbearbeitungsmaschine nach einem der vorhergehenden Ansprüche,
dadurch gekennzeichnet, daß der hintere Teil der Stütze (20) und des Abstreifers (21) zumindest im wesentlichen horizontal ausgerichtet und mit einem Erdlockerungselement (24) versehen ist.

22. Bodenbearbeitungsmaschine nach Anspruch 21,
dadurch gekennzeichnet, daß das Erdlockerungselement (24) durch zwei nebeneinander angeordnete Zinken aus einem elastischen Material gebildet ist.

## Revendications

1. Machine pour cultiver le sol comprenant un châssis et au moins un rouleau (9) muni d'une pluralité d'organes circulaires (11, 31) disposés de manière adjacente,
**caractérisée** en ce que les organes circulaires (11, 31) ont la forme de disques dont les faces, qui sont au moins sensiblement perpendiculaires à l'axe de rotation (a) du rouleau (9), ont un profil formant, à partir d'un support central (10) une spirale vers la périphérie d'un organe circulaire.

2. Machine pour cultiver le sol selon la revendication 1, caractérisée en ce que les organes circulaires (11) comportent sur leur périphérie un rebord (14) ayant des faces supportantes alternativement plus étroites et plus larges.

3. Machine pour cultiver le sol selon l'une quelconque des revendication précédentes, caractérisée en ce que les organes circulaires (11) ont la forme de disques creux dont les parois latérales présentent un profil comprenant respectivement des renfoncements (12) et des bombements (13).

4. Machine pour cultiver le sol selon l'une quelconque des révendications précédentes, caractérisée en ce que le profil présente des renfoncements (12) et des bombements (13) respectivement de largeurs croissantes, en allant vers la périphérie de chaque organe circulaire (11).

5. Machine pour cultiver le sol selon l'une quelconque des revendications 3 et 4, caractérisée en ce que chaque organe circulaire (11) est constitué de deux parties profilées, espacées l'une de l'autre, qui sont interconnectées sur leurs périphéries.

6. Machine pour cultiver le sol selon la revendication 5, caractérisée en ce que le profil se raccorde à un rebord (14) situé à la périphérie, l'agencement étant tel que le rebord (14) est constitué par des faces supportantes alternativement plus étroites et plus larges qui font partie respectivement des renfoncements (12) et des bombements (13) du profil.

7. Machine pour cultiver le sol selon l'une quelconque des revendications précédentes, caractérisée en ce que les organes circulaires (31) présentent des saillants (33) analogues à des rayons et les saillants analogues à des rayons de deux organes circulaires adjacents se font face mutuellement.

8. Machine pour cultiver le sol selon la revendication 4, caractérisée en ce qu'un organe circulaire (31) comprend une pluralité de saillants (33) qui s'étendent en spirale à partir du support central (10) du rouleau (9A).

9. Machine pour cultiver le sol selon la revendication 8, caractérisée en ce que la distance entre les saillants (33) formant une spirale vers l'extérieur augmente vers la périphérie.

10. Machine pour cultiver le sol selon la revendication 8 ou 9, caractérisée en ce que, à la périphérie, les saillants (33) sont montés sur un rebord (34) en forme de jante dont le côté large est au moins sensiblement parallèle à l'axe de rotation du rouleau.

11. Machine pour cultiver le sol selon l'une quelconque des revendications précédentes, caractérisée en ce que la périphérie de chaque organe circulaire (11, 31) est munie d'une couronne de dents (16).

12. Machine pour cultiver le sol selon la revendication 11, caractérisée en ce que la couronne de dents (16) comporte des parties renflées (15).

13. Machine pour cultiver le sol selon la revendication 11 ou 12, caractérisée en ce que les dents (16) des couronnes de dents ont la forme de dents de scie dont les bords d'attaque s'étendent au moins sensiblement tangentiellement, en étant vus dans le sens de rotation du rouleau (9, 9A), tandis que les bords de fuite sont dirigés sensiblement radialement.

14. Machine pour cultiver le sol selon l'une quelconque des revendications 11 à 13, caractérisée en ce que la couronne de dents est prévue au milieu du rebord, l'agencement étant tel que l'assemblage a une forme en T.

15. Machine pour cultiver le sol selon l'une quelconque des revendications précédentes, caractérisée en ce qu'un râcloir (21) est disposé entre deux organes circulaires (11, 31) adjacents pour coopérer avec le profil ou avec des saillants (12, 13, 33) sur les organes circulaires (11, 31).

16. Machine pour cultiver le sol selon l'une quelconque des révendications précédentes, caractérisée en ce que des râcloirs (21) sont situés entre les organes circulaires (11, 31) sur leurs côtés postérieurs et sont montés sur un support (17) au moyen de bras (19) qui s'étendent à partir d'un support central (10) du rouleau (9, 9A).

17. Machine pour cultiver le sol selon l'une quelconque des revendications précédentes, caractérisée en ce que chaque râcloir est situé avec son bord d'attaque en une position plus haute, par rapport au sol, que son bord postérieur, le plan de chaque râcloir étant au moins sensiblement perpendiculaire aux faces latérales des saillants (12, 13, 33) d'un organe circulaire (11, 31).

18. Machine pour cultiver le sol selon l'une quelconque des revendications 15 à 17, caractérisée en ce que chaque râcloir (21) s'étend à partir de la périphérie des organes circulaires (11, 31) jusqu'en dessous du support central (10) de ces organes circulaires.

19. Machine pour cultiver le sol selon l'une quelconque des revendications 15 à 18, caractérisée en ce que chaque râcloir (21) est fixé à un support (20) qui est relié à l'extrémité inférieure d'un bras (19) s'étendant vers le haut.

20. Machine pour cultiver le sol selon la revendication 19, caractérisée en ce que le support (20) comporte une patte dirigiée vers le bas qui se loge dans une ouverture du râcloir (21), et en ce que chaque râcloir est boulonné par son bord postérieur sur le support (20) au moyen d'un boulon (22).

21. Machine pour cultiver le sol selon l'une quelconque des revendications précédentes, caractérisée en ce que la partie postérieure de chaque support (20) et de chaque râcloir (21) s'étend au moins sensiblement horizontalement et est munie d'un organe sous-soleur (24).

22. Machine pour cultiver le sol selon la revendication 21, caractérisée en ce que l'organe sous-soleur (24) est constitué de deux dents en un matériau élastique, situées en position adjacente l'une de l'autre.
